# EUROPEAN PATENT SPECIFICATION

(11) **EP 2 378 252 B1**
(45) Date of publication and mention of the grant of the patent: **19.08.2015**
(21) Application number: 11162345.0
(22) Date of filing: 14.04.2011
(51) Int. Cl.: G01D 5/20

(54) **Electromagnetic encoder**
Elektromagnetischer Geber
Codeur électromagnétique

(30) Priority: 19.04.2010 JP 2010096361
(43) Date of publication of application: 19.10.2011
(73) Proprietor: Mitutoyo Corporation, Kawasaki-shi, Kanagawa 213-8533 (JP)
(72) Inventor: Sasaki, Kouji, Kawasaki Kanagawa 213-8533 (JP)
(74) Representative: Grünecker Patent- und Rechtsanwälte PartG mbB

(56) References cited:
- EP-A1- 2 085 751
- DE-A1-102004 057 205
- US-A- 5 434 504

## Description

### BACKGROUND OF THE INVENTION

### 1. Field of the Invention

The present invention relates to an electromagnetic encoder. Particularly, the present invention relates to a highly-accurate and low-cost electromagnetic encoder which is suitable for calipers, indicators, linear scales, micrometers, and the like, can achieve great signal strength by reducing offsets with a small scale width, that is, an encoder width, and is strong with variation in a pitching direction.

### 2. Description of Related Art

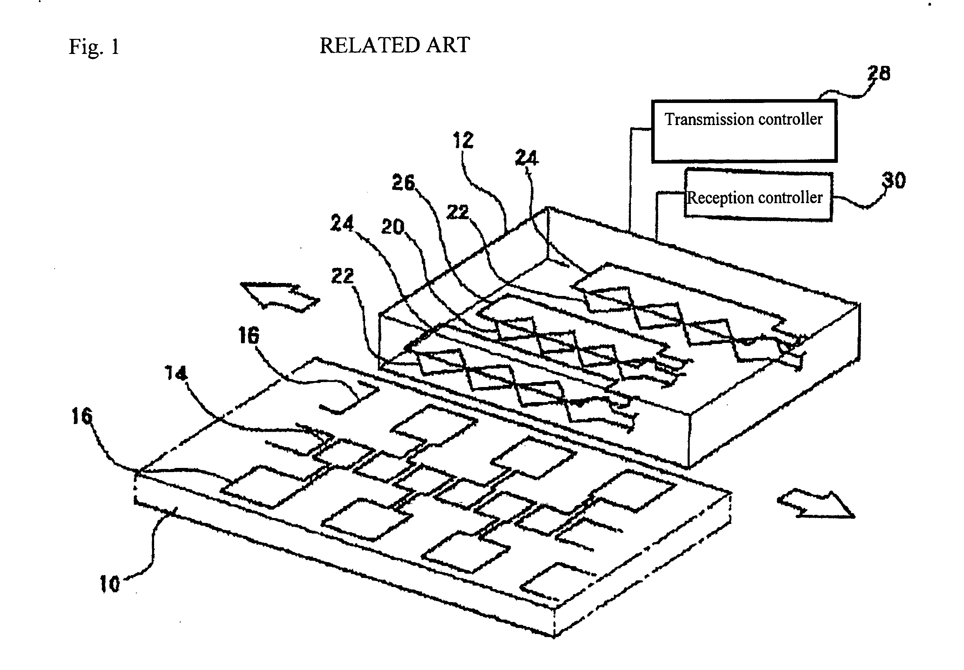

As disclosed in Related Art 1 and Related Art 2, and as Fig. 1 illustrates the example of Related Art 2, an electromagnetic encoder is known, which has a number of scale coils 14, 16 arranged on a scale 10 along a measuring direction; and transmitting coils 24, 26 and receiving coils 20, 22 arranged on a grid (also referred to as a slider) 12 that can move relative to the scale 10 in the measuring direction. In the electromagnetic encoder, a relative movement amount between the scale 10 and the grid 12 is detected based on variation in magnetic flux detected by the receiving coils via the scale coils at the time of exciting the transmitting coils. As shown in Fig, 1, the electromagnetic encoder also has a transmission controller 28 and a reception controller 30.

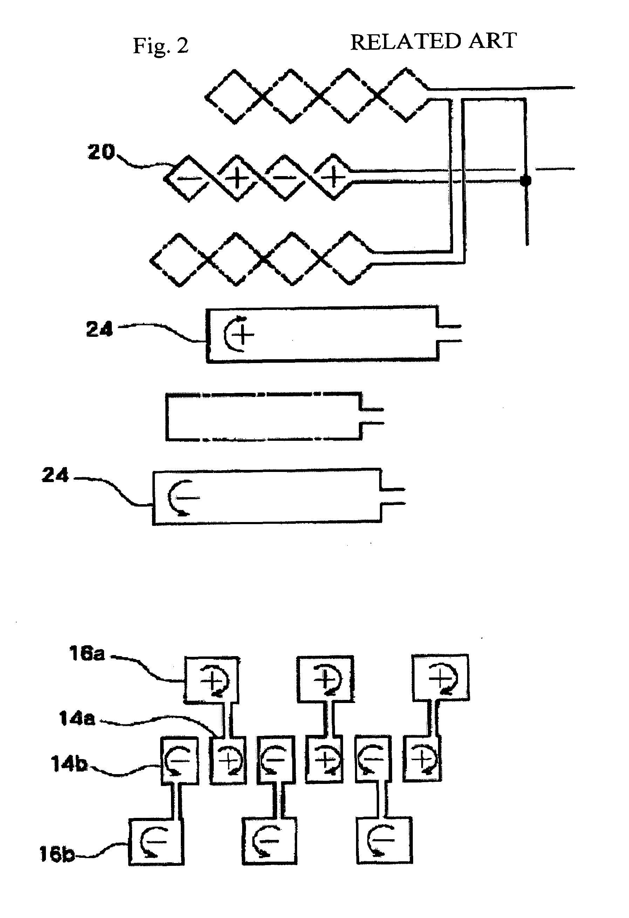

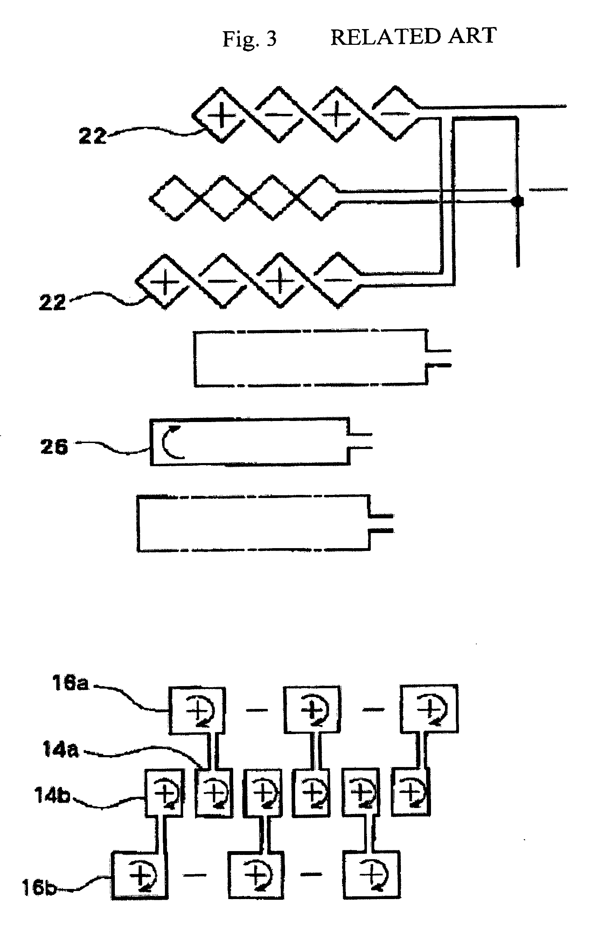

As shown in Fig. 2, in order to reduce offsets, that are excessive signals, in the electromagnetic encoder, the magnetic field generated by the transmitting coils 24 is cancelled, and the receiving coils 20 are provided in a net-zero area (in an intermediate area between the transmitting coils on both sides in the example of Fig. 2). Incidentally, in Related Art 2, the second receiving coils 22 are provided on both sides of the second transmitting coils 26 as shown in Fig. 3, in addition to the configuration made of the first transmitting coils 24 and the first receiving coils 20 shown in Fig. 2.

However, since the above-described configuration requires three lines of scale coils and makes wiring of the scale coils longer, generated induction current is attenuated by impedance of the scale coils themselves and it is difficult to obtain strong signals.

In order to address such circumstances, the present applicant proposed, in Related Art 3, that a plurality of transmitting coils, receiving coils, and scale coils are symmetrically provided relative to the center of the scale, and one of the scale coils symmetrically provided relative to the center of the scale is displaced by a ½ phase relative to the other scale coil.
Related Art 1: Japanese Patent Application Publication No. H10-318781
Related Art 2: Japanese Patent Application Publication No. 2003-121206 (Fig. 1, Fig. 2 and Fig. 3)
Related Art 3: Japanese Patent Application Publication No. 2009-186200

However, since a plurality of lines of scale coils are required in a scale width direction, the scale width, that is, the encoder width becomes large, while the length is small. In addition, the encoder is weak with variation in a pitching direction, while it is strong with a yaw direction.

### SUMMARY OF THE INVENTION

The present invention is provided to address such circumstances of the conventional technologies. An advantage of a non-limiting feature of the present invention is to provide a highly-accurate and low-cost electromagnetic encoder which can achieve great signal strength by reducing offsets with a small scale width, that is, an encoder width, and is strong with variation in a pitching direction.

According to the present invention, in order to address the conventional circumstances, an electromagnetic encoder includes a number of scale coils arranged on a scale along a measuring direction; and a transmitting coil and receiving coils arranged on a grid to be movable relative to the scale in the measuring direction, in which a relative movement amount between the scale and the grid is detected based on variation in magnetic flux detected by the receiving coils via the scale coils at the time of exciting the transmitting coil. The receiving coils are provided in the measuring direction to be a plurality of sets, one of the sets of the receiving coils being displaced by a ½ phase of a scale pitch relative to the other set of the receiving coils.

According to the present invention, the receiving coils are connected so as to take the output difference of the plurality of sets of the receiving coils.

According to the present invention, the electromagnetic encoder further includes a plurality of tracks having a different scale pitch in which the scale coils, the transmitting coil and the receiving coils are provided, so that the absolute position can be measured.

According to the present invention, it is possible to downsize an encoder by reducing a scale width, that is, an encoder width. Also, since the entire length of the transmitting coils can be made smaller than that of Related Art 3, the receiving signal strength can be increased. Further, the total area of the encoder can be reduced, and thereby a small-sized encoder can be provided. Furthermore, it is possible to achieve an encoder that is strong with variation in a pitching direction by providing a plurality of receiving coils along a measuring direction.

### BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:
Fig. 1 is a perspective view illustrating an entire configuration of a conventional electromagnetic encoder described in Related Art 2;
Fig. 2 is a plain view illustrating a coil position on a grid and a first effect in the conventional electromagnetic encoder described in Related Art 2;
Fig. 3 is a plain view illustrating a coil position on a grid and a second effect in the conventional electromagnetic encoder described in Related Art 2;
Fig. 4 is a plain view of a grid and a scale according to a first embodiment of the present invention,
Figs. 5A and 5B illustrate an example of a signal of each receiving coil according to the first embodiment, and Fig. 5C illustrates an example of a signal in which offsets are cancelled; and
Fig. 6 is a plain view of a grid and a scale according to a second embodiment of the present invention.

### DETAILED DESCRIPTION OF THE INVENTION

The particulars shown herein are by way of example and for purposes of illustrative discussion of the embodiments of non-limiting features of the present invention only and are presented in the cause of providing what is believed to be the most useful and readily understood description of the principles and conceptual aspects of non-limiting features of the present invention. In this regard, no attempt is made to show structural details of non-limiting features of the present invention in more detail than is necessary for the fundamental understanding of the present invention, the description is taken with the drawings making apparent to those skilled in the art how the forms of non-limiting features of the present invention may be embodied in practice.

Embodiments of non-limiting features of the present invention will be described in detail with reference to the attached drawings.

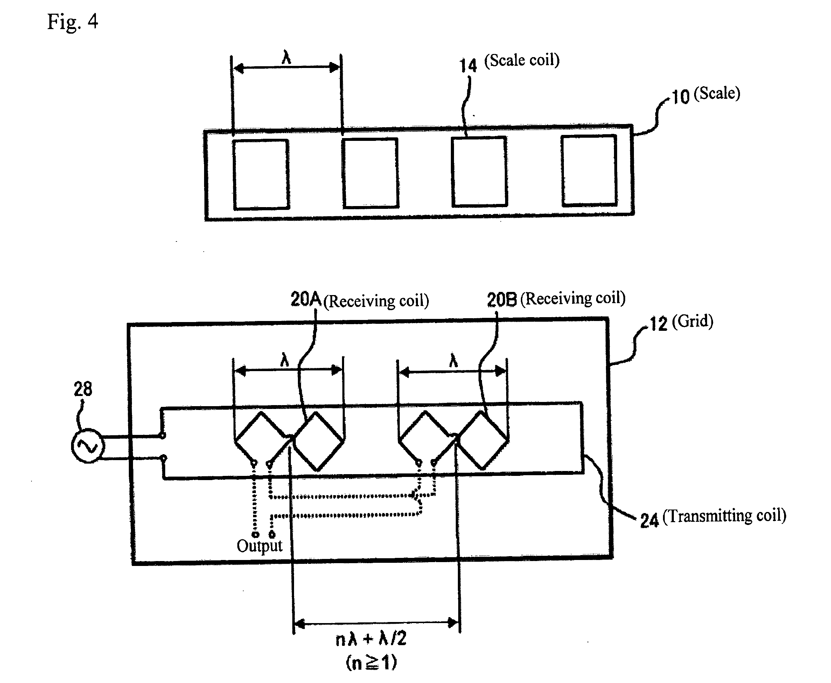

As shown in Fig. 4, a first embodiment of a non-limiting feature of the present invention includes a plurality of scale coils 14 arranged on a scale 10 along a measuring direction; and a transmitting coil 24 and receiving coils arranged on a grid 12 to be movable relative to the scale 10 in the measuring direction, in which a relative movement amount between the scale 10 and the grid 12 is detected based on variation in magnetic flux detected by the receiving coils via the scale coils 14 at the time of exciting the transmitting coil 24. In the electromagnetic encoder, two sets of the receiving coils (20A, 20B) are provided along the measuring direction, and one of the receiving coils (for example, 20A) is displaced by a ½ phase of a scale pitch λ relative to the other of the receiving coils (for example, 20B).

The two sets of the receiving coils 20A and 20B have a common shape, and are connected so as to output difference between signals of the receiving coils 20A and 20B.

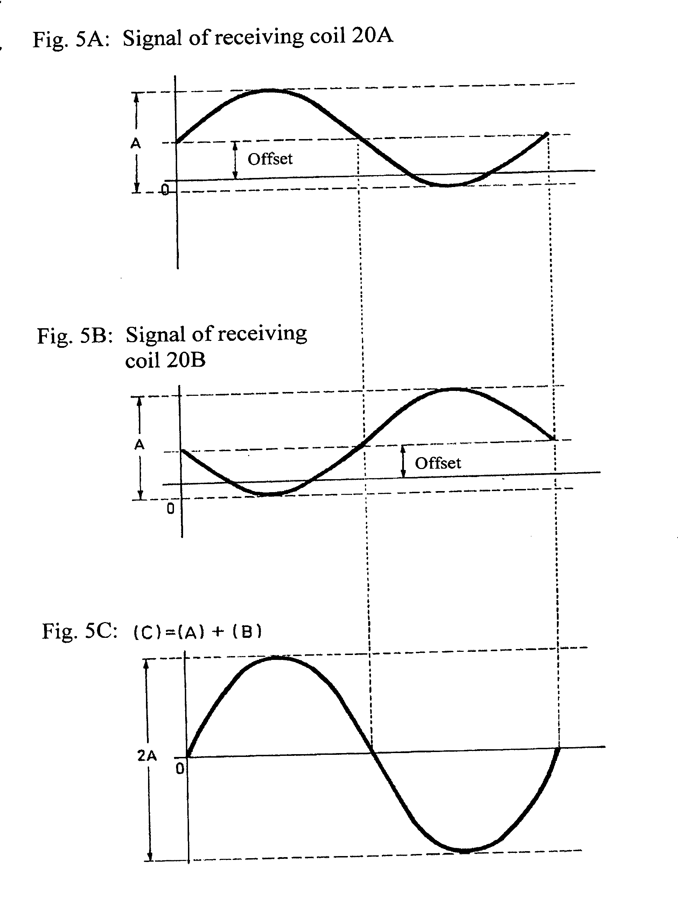

When electric current is caused to flow through the transmitting coil 24, signals having a waveform where the positive and the negative are inverted with the same offset appear in the receiving coils 20A and 20B as shown in Figs. 5A and 5B. Accordingly, by connecting the two receiving coils 20A and 20B to take the difference between the signals as shown in Fig. 4, it is possible to obtain a signal where the offsets are cancelled as shown in Fig. 5C.

Next, a second embodiment of a non-limiting feature of the present invention will be explained.

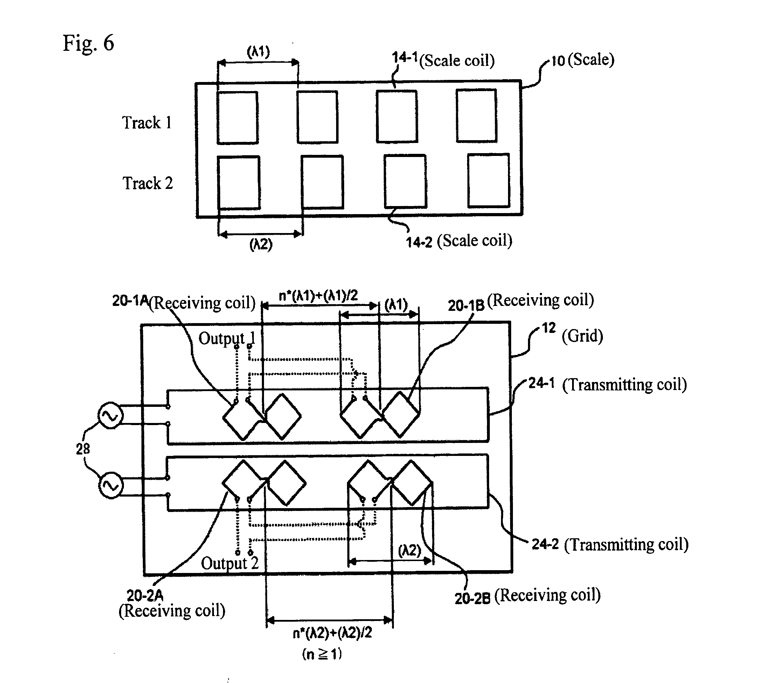

As shown in Fig. 6, the second embodiment makes it possible to measure the absolute position by providing two sets of tracks, each of which has the scale coils, the transmitting coil and the receiving coils according to the first embodiment, in a scale width direction with a different scale pitch λ1, λ2. One of the two sets of tracks has scale coils 14-1, a transmitting coil 24-1, and receiving coils 20-1A and 20-1 B, and the other has scale coils 14-2, a transmitting coil 24-2, and receiving coils 20-2A and 20-2B.

According to the second embodiment, it is possible to achieve an encoder that can accurately measure an absolute position with a small scale width of two tracks.

The number of the track is not limited to two. Three or more tracks may be provided to increase the measuring area.

In the above-described embodiments, the shape of the receiving coil is rhomboid. However, the shape of the receiving coil is not limited to this. Other shapes such as sine wave shapes or shapes similar thereto may be used.

In the above-described embodiments, the scale coil has a shape of a rectangular frame. However, the shape of the scale coil is not limited to this. For example, the scale coil may have a plate shape in which an electrode is provided within a rectangle.

In the first embodiment, a pair of receiving coils is provided in a measuring direction (horizontal direction of Fig. 4). However, another pair of receiving coils may be provided with a phase displacement of 90 degrees, for example, so as to be used for discrimination of the direction. Alternatively, three pairs of receiving coils may be provided with a phase displacement of 120 degrees, respectively, so as to obtain three-phase signals that can be used for interpolating calculation and the like.

In the second embodiment, two pairs of receiving coils are provided in a measuring direction (horizontal direction of Fig. 6). However, six pairs of receiving coils may be provided with a phase displacement of 120 degrees, respectively, so as to obtain three-phase signals that can be used for interpolating calculation and the like.

Application of a non-limiting feature of the present invention is not limited to a low-cost encoder. The present invention can be applied to a general electromagnetic encoder.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

## Claims

1. An electromagnetic encoder comprising:
a plurality of scale coils (14) arranged on a scale (10) along a measuring direction; and
a transmitting coil (24) and a plurality of receiving coils (20A, 20B), the transmitting coil (24) and the plurality of receiving coils (20A, 20B) arranged on a grid (12) and being movable relative to the scale in the measuring direction, wherein:
a relative movement amount between the scale (10) and the grid (12) is detected based on variation in magnetic flux detected by the plurality of receiving coils (20A, 20B) via the plurality of scale coils (14) at the time of exciting the transmitting coil (24);
**characterized in that**
the plurality of receiving coils (20A, 20B) is arranged in the measuring direction in a plurality of sets, one set (20A) of the plurality of sets of receiving coils being displaced by nλ + ½λ relative to another set (20B) of the plurality of sets of receiving coils with λ being a scale pitch and n being a natural number ≥ 1.

2. The electromagnetic encoder according to claim 1, wherein the plurality of receiving coils (20A, 20B) is connected so as to take the output difference of the plurality of sets of the receiving coils.

3. The electromagnetic encoder according to claim 1 or 2, wherein the electromagnetic encoder further comprises a plurality of tracks having a different scale pitch in which the plurality of scale coils (14-1, 14-2), the transmitting coil (24-1, 24-2) and the plurality of receiving coils (20-1A, 20-1 B, 20-2A, 20-2B) are provided.

## Patentansprüche

1. Elektromagnetischer Kodierer, der umfasst:
eine Vielzahl von Skalenspulen (14), die auf einer Skala (10) entlang einer Messrichtung angeordnet sind; und
eine Übertragungsspule (24) und eine Vielzahl von Empfängerspulen (20a, 20b), wobei die Senderspulen (24) und die Vielzahl von Empfängerspulen (20a, 20b) auf einem Gitter (12) angeordnet sind und relativ zu der Skal in Messrichtung beweglich sind, wobei:
ein Relativbewegungsbetrag zwischen der Skala (10) und dem Gitter (12) basierend auf Variation des magnetischen Fluxes erfasst wird, der durch die Vielzahl von Empfängerspulen (20a, 20b) über die Vielzahl von Skalenspulen (14) zu der Zeit der Anregung der Senderspulen (24) erfasst wird;
**dadurch gekennzeichnet, dass**
die Vielzahl von Empfängerspulen (20a, 20b) in einer Vielzahl von Sätzen in Messrichtung angeordnet ist, wobei ein Satz (20a) der Vielzahl von Sätzen der Empfängerspulen um nλ + 1/2λ relativ zu einem anderen Satz (20b) der Vielzahl von Sätzen von Empfängerspulen verschoben ist, wobei A eine Skalenteilung ist und n eine natürliche Zahl ≥1 ist.

2. Elektromagnetischer Kodierer nach Anspruch 1, wobei die Vielzahl von Empfängerspulen (20a, 20b) so verbunden ist, dass sie den Ausgabeunterschied der Vielzahl von Sätzen von Empfängerspulen aufnimmt.

3. Elektromagnetischer Kodierer nach Anspruch 1 oder 2, wobei der elektromagnetische Kodierer weiterhin eine Vielzahl von Spuren mit einer unterschiedlichen Skalenteilung umfasst, in denen die Vielzahl von Skalenspulen (14-1, 14-2), die Sendespule (24-1, 24-2) und die Vielzahl von Empfängerspulen (20-1 a, 20-1 b, 20-2a, 20-2b) bereitgestellt sind.

## Revendications

1. Encodeur électromagnétique comprenant :
une pluralité de bobines d'échelle (14) agencées sur une échelle (10) selon une direction de mesure ; et
une bobine émettrice (24) et une pluralité de bobines réceptrices (20A, 20B), la bobine émettrice (24) et la pluralité de bobines réceptrices (20A, 20B) étant agencées sur une grille (12) et étant mobiles par rapport à l'échelle dans la direction de mesure, dans lequel :
une grandeur de mouvement relatif entre l'échelle (10) et la grille (12) est détectée sur base d'une variation de flux magnétique détectée par la pluralité de bobines réceptrices (20A, 20B) via la pluralité de bobines d'échelle (14) au moment de l'excitation de la bobine émettrice (24) ;
**caractérisé en ce que**
la pluralité de bobines réceptrices (20A, 20B) est agencée en direction de mesure en une pluralité d'ensembles, un ensemble (20A) de la pluralité d'ensembles de bobines réceptrices étant déplacé de nλ + ½λ par rapport à un autre ensemble (20B) de la pluralité d'ensembles de bobines réceptrices, λ étant un pas d'échelle et n étant un nombre naturel ≥ 1.

2. Encodeur électromagnétique selon la revendication 1, dans lequel la pluralité de bobines réceptrices (20A, 20B) est connectée de manière à recevoir la différence de sortie de la pluralité d'ensembles des bobines réceptrices.

3. Encodeur électromagnétique selon la revendication 1 ou 2, dans lequel l'encodeur électromagnétique comprend en outre une pluralité de pistes ayant un pas d'échelle différent dans lesquelles la pluralité de bobines d'échelle (14-1, 14-2), la bobine émettrice (24-1, 24-2) et la pluralité de bobines réceptrices (20-1A, 20-1B, 20-2A, 20-2B) sont pourvues.
